# EUROPÄISCHE PATENTSCHRIFT

(11) **EP 3 607 811 B1**
(45) Veröffentlichungstag und Bekanntmachung des Hinweises auf die Patenterteilung: **11.08.2021**
(21) Anmeldenummer: 19178601.1
(22) Anmeldetag: 06.06.2019
(51) Int. Cl.: A01D 34/23

(54) **SCHNEIDWERK**
CUTTING TOOL
BARRE DE COUPE

(30) Priorität: 08.08.2018 DE 102018119262
(43) Veröffentlichungstag der Anmeldung: 12.02.2020
(73) Patentinhaber: CLAAS Selbstfahrende Erntemaschinen GmbH, 33428 Harsewinkel (DE)
(72) Erfinder: Knierbein, Claudius, 59510 Lippetal-Herzfeld (DE); Schönert, Benedikt, 59823 Arnsberg (DE); Dudler, Heribert, 33428 Harsewinkel (DE); Eidhoff, Lukas, 33332 Gütersloh (DE)
(74) Vertreter: CLAAS Gruppe

(56) Entgegenhaltungen:
- EP-A1- 2 647 276
- DE-A1- 4 027 727
- US-A- 1 281 111
- US-A- 1 295 659

## Beschreibung

Die vorliegende Erfindung betrifft ein Schneidwerk gemäß dem Oberbegriff des Anspruches 1. Weiterhin betrifft die Erfindung einen selbstfahrenden Mähdrescher.

Schneidwerke kommen zum Ernten von unterschiedlichen Fruchtarten wie Getreide, Raps und dergleichen zum Einsatz, wobei einzelne Komponenten der Schneidwerke an die jeweilige zu erntende Fruchtart durch eine gezielte Einstellung anpassbar sind, wie beispielsweise die Ausfahrlänge des Schneidtisches oder die Haspelposition, bzw. zusätzliche Komponenten an dem Schneidwerk montierbar sind, im Fall von Raps sogenannte Trennmesser. Die Trennmesser sind endseitig an einem Rahmen des Schneidewerks angeordnet und erstrecken sich im Wesentlichen vertikal zu einer über die Breite des Schneidwerks erstreckenden horizontal verlaufenden Mäheinrichtung. Die Trennmesser dienen dazu, stark ineinander verschlungenes Erntegut beiderseits des Schneidwerks in einer vertikalen Ebene zu zerteilen, um Ernteverluste zu reduzieren. Bei Sonderkulturen wie beispielsweise Raps, die eine starke Verwachsung der Stängel und Fruchtteile ineinander zeigen, gewährleisten die Trennmesser eine gute Trennung des Halmgutes zwischen dem noch stehenden und dem vom Schneidtisch aufzunehmenden Erntegutes. Ernteverluste, die mit der Verwendung eines üblichen passiven Halmteilers einhergingen, werden so vermieden. Das Schneidwerk wird an einer Aufnahmevorrichtung eines Mähdreschers aufgenommen, welcher die für den Betrieb des Schneidwerkes notwendigen Antriebskräfte bereitstellt. Hierzu wird das Schneidwerk an ein Hydrauliksystem des Mähdreschers sowie an einen mechanischen Antriebsstrang des Mähdreschers anschlossen.

Ein Schneidwerk der eingangs genannten Art ist aus der EP 2 647 276 A1 bekannt. Darin wird ein Schneidwerk, umfassend einen Rahmen, an dem eine sich im Wesentlichen über die Breite des Schneidwerks erstreckende, horizontal verlaufende Mäheinrichtung angeordnet ist, die an zumindest einer Messerschiene angeordnete Mähmesser aufweist, wobei zum Antreiben der Mähmesser jeweils ein Getriebe endseitig an dem Rahmen angeordnet ist, welche jeweils eine Rotationsbewegung einer an dem Schneidwerk angeordneten Antriebswelle in eine oszillierend translatorische Bewegung der Mähmesser umsetzen, sowie jeweils endseitig an dem Rahmen lösbar befestigte Trennmesser, welche sich im Wesentlichen vertikal zu der Mäheinrichtung erstrecken und durch einen trennbaren mechanischen Antriebsstrang angetrieben sind, beschrieben. Die endseitig angeordneten Trennmesser sind jeweils durch eine Schraubverbindung an dem Rahmen des Schneidwerks befestigt. An einer Eingangswelle des Trennmessers befindet sich eine erste Kupplungshälfte, welche bei der Montage mit einer zweiten Kupplungshälfte an einer ersten Abtriebswelle des Getriebes in Eingriff gebracht wird. Eine zweite Abtriebswelle des Getriebes treibt die Mäheinrichtung an.

Ausgehend vom vorstehend genannten Stand der Technik liegt der Erfindung die Aufgabe zugrunde, ein Schneidwerk sowie einen selbstfahrenden Mähdrescher in der Weise weiterzubilden, dass es sich durch eine erhöhte Funktionssicherheit und einen flexibleren Einsatzbereich auszeichnet.

Diese Aufgabe wird erfindungsgemäß durch ein Schneidwerk gemäß den Merkmalen des Anspruches 1 gelöst. Des Weiteren wird die Aufgabe durch einen selbstfahrenden Mähdrescher gemäß dem Anspruch 10 gelöst.

Vorteilhafte Weiterbildungen sind Gegenstand der Unteransprüche.

Gemäß dem Anspruch 1 wird ein Schneidwerk, umfassend einen Rahmen, an dem eine sich im Wesentlichen über die Breite des Schneidwerks erstreckende, horizontal verlaufende Mäheinrichtung angeordnet ist, die an zumindest einer Messerschiene angeordnete Mähmesser aufweist, vorgeschlagen, wobei zum Antreiben der Mäheinrichtung zumindest ein Getriebe endseitig an dem Rahmen angeordnet ist, welches eine Rotationsbewegung einer an dem Schneidwerk angeordneten Antriebswelle in eine oszillierend translatorische Bewegung der Mähmesser umsetzen, sowie jeweils endseitig an dem Rahmen lösbar befestigbare Trennmesser, welche sich im Wesentlichen vertikal zu der Mäheinrichtung erstrecken, von denen zumindest eines durch einen trennbaren mechanischen Antriebsstrang angetrieben ist. Erfindungsgemäß ist in zumindest einem Antriebsstrang eine Kupplung angeordnet, welche im laufenden Betrieb des Schneidwerkes durch zumindest einen Aktuator betätigbar ist, um das zumindest eine Trennmesser zu- oder abzuschalten. Die Möglichkeit des Abschaltens zumindest eines Trennmessers im laufenden Betrieb des Schneidwerks, d.h. bei permanent angetriebener Mäheinrichtung, trägt zur Erhöhung der Sicherheit bei. Zudem wird die Effizienz des Schneidwerkes gesteigert, wenn ein oder beide montierten Trennmesser abgeschaltet werden können, wenn deren Antrieb aufgrund der Erntebedingung nicht erforderlich ist. Zudem kann, insbesondere bei beidseitig schaltbaren Trennmessern, auf einen zeitaufwendigen An- und Abbau der Trennmesser verzichtet werden, wenn ein Wechsel zwischen Schlägen mit unterschiedlichen Erntebedingungen erfolgt. Ein weiterer wesentlicher Vorteil besteht darin, dass das oder die Trennmesser nicht nur, wie im Allgemeinen üblich, bei der Ernte von Raps sondern im Bedarfsfall bei anderen Erntegutarten einsetzbar sind, wenn diese stark ineinander verschlungen sind. Der trennbare Antrieb des zumindest einen Trennmessers kann, wie in der EP 2 647 276 A1 beschrieben, durch eine Anbindung an eine zusätzliche Abtriebswelle des Getriebes erfolgen. Alternativ kann zum Antreiben des zumindest einen Trennmessers eine mechanische Verbindung mit der sich oszillierend bewegenden Messerschiene der Mäheinrichtung geschaffen werden, welche die schwingende translatorische Bewegung auf den durch die Kupplung unterbrechbaren Antriebsstrang überträgt. Bei Schneidwerken mit großer Arbeitsbreite sind im Allgemeinen zumindest zwei Messerschienen vorgesehen, die jeweils durch ein endseitig an dem Rahmen angeordnetes Getriebe separat angetrieben werden. Die jeweils endseitig an dem Rahmen lösbar befestigbaren Trennmesser, welche sich im Wesentlichen vertikal zu der Mäheinrichtung erstrecken können jeweils durch einen trennbaren mechanischen Antriebsstrang angetrieben werden. Hierbei kann in dem jeweiligen Antriebsstrang eine Kupplung angeordnet sein, welche im laufenden Betrieb des Schneidwerkes durch zumindest einen Aktuator betätigbar ist, um das jeweilige Trennmesser zu- oder abzuschalten.

Dabei kann der zumindest eine Aktuator nach einem mechanischen, hydraulischen oder elektromechanischen Wirkprinzip arbeiten. Denkbar ist zum Beispiel ein Aktuator, der eine Hebelanordnung zur Ansteuerung der Kupplung umfasst, die mittels eines Bowdenzuges betätigbar ist. Alternativ kann ein einfach wirkender Hydraulikzylinder vorgesehen sein, der mit einem Hydraulikdruck beaufschlagbar ist, um die Kupplung anzusteuern. Der nach dem hydraulischen Wirkprinzip arbeitende Aktuator kann dann zum Einsatz kommen, wenn eine weitere Komponente des Schneidwerks ebenfalls hydraulisch betätigbar bzw. antreibbar ist, wie beispielsweise eine Haspel.

Bevorzugt sollte der zumindest eine Aktuator an dem Schneidwerk angeordnet sein. Die Anordnung des zumindest einen Aktuators an dem Schneidwerk vereinfacht es, für dessen Betrieb notwendige Zuleitungen oder Bauteile zu integrieren, so dass herausragende oder herabhängende Leitungen oder dergleichen vermieden werden können. Zudem trägt die Anordnung des zumindest einen Aktuators an dem Schneidwerk dazu bei, das Gewicht der Trennmesser zu reduzieren.

Insbesondere kann der zumindest eine Aktuator als Elektromotor ausgeführt sein. Dabei kann der Aktuator als Linearmotor ausgeführt sein. Vorteilhaft an der Ausführung des zumindest einen Aktuators als Elektromotor ist, dass dieser diagnosefähig ist. Des Weiteren ermöglicht der Elektromotor einen Sanftanlauf, so dass zunächst ein schnelles erstes Ankuppeln der Kupplung erfolgen kann und anschließend eine langsam zunehmende Beaufschlagung der Kupplung bis zum vollständigen Einrücken.

Gemäß einer vorteilhaften Weiterbildung kann die zumindest eine durch den Aktuator betätigbare Kupplung als eine Reibkupplung ausgeführt sein. Die Ausführung der zumindest einen schaltbaren und durch den Aktuator betätigbaren Kupplung als Reibkupplung vereint neben der Schaltbarkeit zudem die Funktion einer Überlastsicherung. Hierzu können die Reiblamellen der Reibkupplung mit einer vorgebbaren Federkraft vorgespannt werden. Dadurch lässt sich eine hohe Funktionssicherheit erreichen. Insbesondere das Ansprechverhalten bei einem Lastanstieg an dem Trennmesser kann auf diese Weise verbessert werden. Die Einstellbarkeit der Federkraft ermöglicht eine Variation des Ansprechverhaltens.

Weiterhin kann gemäß einer bevorzugten Ausführungsform zumindest eine Kupplung als Klauenkupplung ausgeführt sein. Diese Variante kann zum Einsatz kommen, wenn lediglich ein Trennmesser des Schneidwerkes schaltbar ausgeführt sein soll. Die als Klauenkupplung ausgeführte Kupplung fungiert dabei als Überlastsicherung für das Trennmesser. Hierzu kann die Klauenkupplung ebenfalls mit einer Federkraft beaufschlagt sein. Die Beaufschlagung der Klauenkupplung mit der Federkraft erfolgt auf Seiten des Vorsatzgerätes, so dass ein spielfreies Ankoppeln des Trennmessers möglich ist.

Die zumindest eine Kupplung kann bevorzugt federbelastet ausgeführt sein. Insbesondere kann hierfür einer vorsatzgeräteseitigen Kupplungshälfte ein Tellerfederpaket zugeordnet sein.

Eine Vereinfachung der Anbindung des jeweiligen Trennmessers an den korrespondierenden Antriebsstrang im Schneidwerk kann dadurch erreicht werden, dass zur trennbaren Verbindung einer der zumindest einen Kupplung nachgeordneten Ausgangswelle mit einer Antriebswelle des Trennmessers eine Schiebemuffe vorgesehen ist. Die Ankopplung erfolgt bei der Anbringung des Trennmessers an dem Vorsatzgerät, indem die Schiebemuffe abschnittsweise über die Ausgangswelle und die Antriebswelle geschoben und anschließend in dieser Position fixiert wird.

Insbesondere kann die zumindest eine Kupplung in an dem Schneidwerk montierter Position der Trennmesser auf einer unmittelbar zu der Mäheinrichtung benachbarten Ebene angeordnet sein. Der Antriebsstrang erstreckt sich im Wesentlichen in einer horizontalen Ebene und greift im unteren Bereich der Trennmesser an diesen an. Hierdurch kann die Lage des Schwerpunktes der Trennmesser optimiert werden. Dadurch wird die Montage der Trennmesser vereinfacht.

Die eingangs gestellte Aufgabe wird weiterhin durch einen Mähdrescher mit einem Schneidwerk gelöst, welches nach einem der Ansprüche 1 bis 9 ausgebildet ist. Ein Mähdrescher mit einem erfindungsgemäß ausgebildeten Schneidwerk ermöglicht einen effizienten und sicheren Betrieb. Auf mögliche innerhalb eines abzuerntenden Bestandes sich ändernde Erntebedingungen, wie das Auftreten von stark ineinander verschlungenem Erntegut, kann durch die bedarfsweise Inbetriebnahme des oder der an dem Schneidwerk angeordneten Trennmesser reagiert werden. Wird das Schneidwerk hingegen an einem Feldrand geführt, wobei sich das zumindest eine zu- oder abschaltbare Trennmesser außerhalb des Bestandes befindet, kann dieses gezielt abgeschaltet werden. Sind beide Trennmesser erfindungsgemäß zu- oder abschaltbar, so kann das eine Trennmesser abgeschaltet werden, während das andere Trennmesser zugeschaltet bleibt.

Bevorzugt kann der Mähdrescher eine Bedieneinrichtung umfassen, mit welcher zumindest eine der Kupplungen im laufenden Betrieb des Schneidwerkes durch eine Ansteuerung des zumindest einen Aktuators zu- oder abschaltbar ist. Hierzu kann die Bedieneinrichtung ein oder mehrere Schaltelemente umfassen, um zumindest eines der Trennmesser zu- oder abschalten zu können. Sind beide Trennmesser durch jeweils eine schaltbare Kupplung ansteuerbar, so sind diese bevorzugt unabhängig voneinander durch die Bedieneinrichtung schaltbar. Dabei können die Schaltelemente der Bedieneinrichtung im einfachsten Fall die Zuleitung zu dem jeweiligen Aktuator unterbrechen, so dass dieser inaktiv ist. Im inaktiven Zustand des Aktuators bzw. der Aktuatoren ist die zumindest eine Kupplung bzw. sind die Kupplungen aufgrund der Beaufschlagung mit der Federkraft eingerückt, so dass das Trennmesser oder die Trennmesser trieblich mit der Mäheinrichtung verbunden sind. Dabei kann die Bedieneinrichtung beispielsweise unmittelbar an dem Schneidwerk angeordnet sein.

Insbesondere kann die Bedieneinrichtung in einer Kabine des Mähdreschers angeordnet sein. Einer Bedienperson des Mähdreschers ermöglicht dies, die Trennmesser im laufenden Erntebetrieb aus der Kabine heraus zu- oder abzuschalten, wenn dies von der Bedienperson aufgrund der visuell erfassten Erntebedingungen für notwendig erachtet wird.

Gemäß einer bevorzugten Weiterbildung kann vorgesehen sein, dass der Mähdrescher eine Steuerungsvorrichtung umfasst, die dazu eingerichtet ist, das Abschalten zumindest eines Trennmessers automatisiert durchzuführen. Dies kann in Abhängigkeit von einer Bestandsdetektion durch eine dem Mähdrescher zugeordnete Sensoranordnung während des Erntebetriebes erfolgen. Oftmals ist an dem Schneidwerk selbst oder am Dach der Kabine des Mähdreschers zumindest ein optischer Sensor angeordnet, der unter anderem der Erfassung des Vorhandenseins eines abzuerntenden Bestandes sowie einer Bestandskante dient. Die von dem zumindest einen Sensor erfassten Signale werden von der Steuerungsvorrichtung ausgewertet. Diese Information kann herangezogen werden, um eines oder beide Trennmesser automatisch temporär abzuschalten, wenn sich eines oder beide Trennmesser außerhalb des abzuerntenden Bestandes befindet bzw. befinden.

Die vorliegende Erfindung wird nachstehend anhand von in den Zeichnungen dargestellten Ausführungsbeispielen näher erläutert.

Es zeigen:
- Fig. 1: eine schematische Darrstellung eines Schneidwerks mit endseitig angeordneten Trennmessern;
- Fig. 2: eine schematische Darstellung eines Antriebsstranges zum mechanischen Antreiben eines Trennmessers gemäß einer ersten Ausführungsform;
- Fig. 3: eine Schnittansicht einer in den Antriebsstrang integrierten schaltbaren Kupplung gemäß Fig. 2;
- Fig. 4: eine schematische Darstellung eines Antriebsstranges zum mechanischen Antreiben eines Trennmessers gemäß einer zweiten Ausführungsform;
- Fig. 5: eine Schnittansicht einer in den Antriebsstrang integrierten, als Überlastsicherung ausgeführten, Kupplung gemäß Fig. 4.

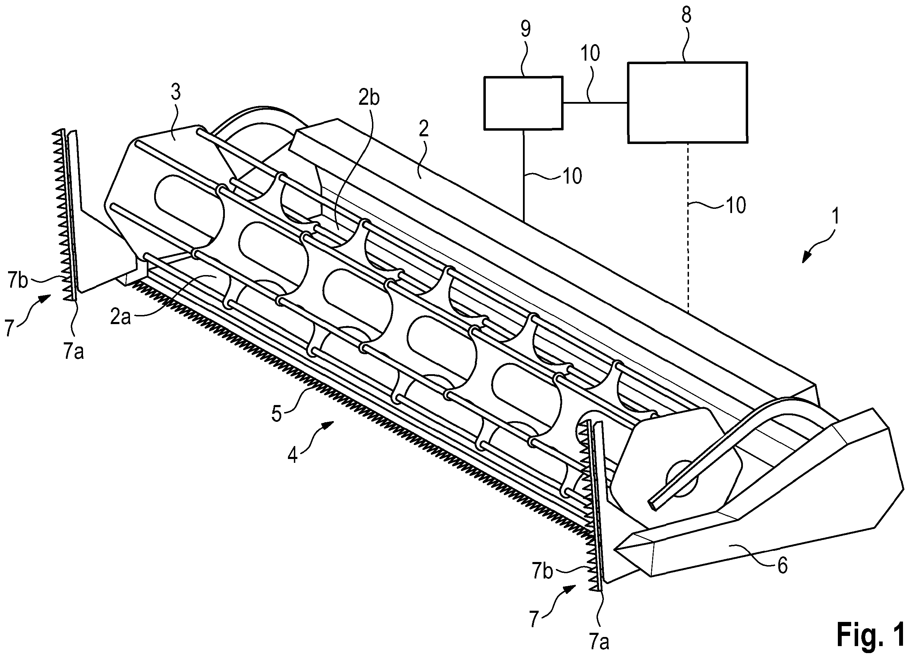

Die Darstellung in Fig. 1 zeigt eine schematische Darstellung eines Schneidwerks 1 mit endseitig angeordneten Trennmessern 7. Das Schneidwerk 1 wird von einem - nicht dargestellten - Mähdrescher aufgenommen und durch diesen angetrieben. Hierzu wird das Schneidwerk 1 mit einem mechanischen Antriebsstrang des Mähdreschers gekoppelt. Zudem kann eine Anbindung des Schneidwerks 1 an ein Hydrauliksystem des Mähdreschers vorgesehen sein, um Komponenten des Schneidwerks 1, wie beispielsweise eine Haspel 3, hydraulisch anzutreiben. Weiterhin ist das Schneidwerk 1 durch zumindest eine Zuleitung 10 mit einer Steuerungsvorrichtung 8 des Mähdreschers verbunden. Weiterhin ist dem Schneidwerk 1 eine Bedieneinrichtung 9 zugeordnet, welche vorzugsweise in einer Kabine des Mähdreschers angeordnet ist. Dabei kann die Bedieneinrichtung 9 in die Steuerungsvorrichtung 8 des Mähdreschers integriert sein. Die Bedieneinrichtung 9 kann auch unmittelbar an dem Schneidwerk 1 angeordnet sein.

Das Schneidwerk 1 umfasst einen Rahmen 2 mit einem Schneidtisch 2a, an den sich eine Schneidmulde 2b anschließt. In der schematischen Darstellung ist der Schneidtisch 2a von der Schneidwerksmulde 2b getrennt angeordnet und gegenüber dieser längsverschiebbar ausgeführt. Es sind auch Schneidwerke vorgesehen, bei welchen der Schneidtisch und die Schneidwerksmulde als eine gemeinsame Baueinheit ausgebildet sind. An der Vorderkante des Schneidtischs 2a ist eine horizontal verlaufende, angetriebene Mäheinrichtung 4 angeordnet ist, die an zumindest einer hin und her beweglichen Messerschiene 5a angeordnete Mähmesser 5 aufweist. An dem Rahmen 2 sind an beiden Enden mehrteilige Halmteiler 6 angeordnet, welche zusammen mit dem Schneidtisch 2a längsverschiebbar sind. Weiterhin sind jeweils endseitig an dem Rahmen 2 lösbar befestigbare Trennmesser 7 angeordnet, welche sich im Wesentlichen vertikal zu der Mäheinrichtung 4 erstrecken. Die Trennmesser 7 sind gemeinsam mit dem Schneidtisch 2a und den Halmteilern 6 verschiebbar. Die Trennmesser 7 weisen jeweils einen oszillierend angetriebenen Mähbalken 7a auf. Die Bedieneinrichtung 9 kann der Bedienung des Schneidwerkes 1 dienen, zumindest um zumindest eines der Trennmesser 7 im laufenden Betrieb der Mäheinrichtung 4 zu- und abschalten zu können.

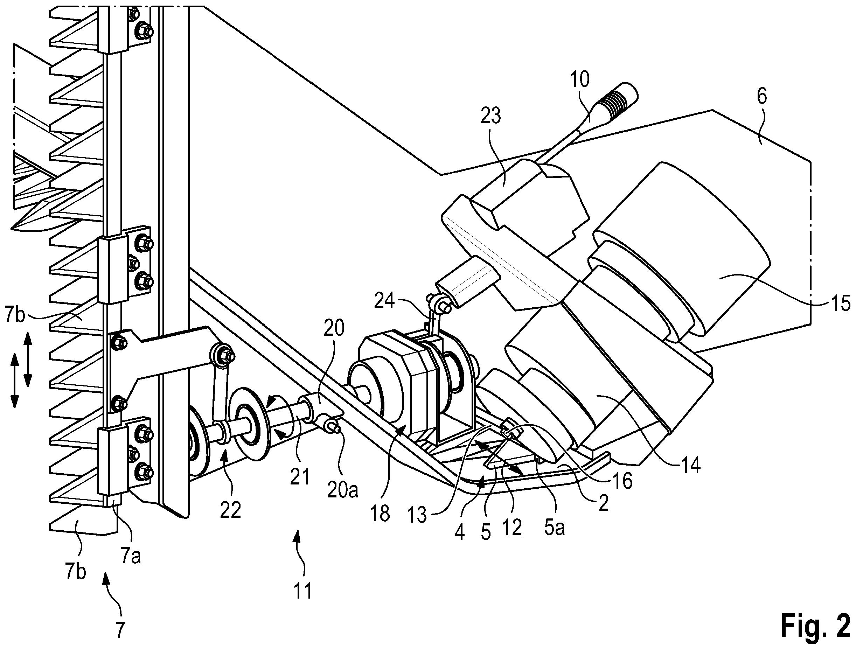

In Fig. 2 ist eine schematische Darstellung eines Antriebsstranges 11 zum mechanischen Antreiben eines Trennmessers 7 gemäß einer ersten Ausführungsform gezeigt. Der in der Fig. 2 dargestellte Antriebsstrang 11 gemäß der ersten Ausführungsform des Schneidwerkes 1 kommt auf beiden Seiten des Schneidwerks 1 zum Antreiben der Trennmesser 7 zum Einsatz. Wegen der identischen Ausgestaltung der beiden Antriebsstränge 11 gilt die nachfolgende Beschreibung des Antriebsstranges 11 gemäß der ersten Ausführungsform des Schneidwerkes 1 entsprechend auch für den gegenüber liegend angeordneten - nicht dargestellten - Antriebsstrang 11.

Die Mäheinrichtung 4 wird durch endseitig an dem Rahmen 2 angeordnete Getriebe 14 angetrieben. Die Getriebe 14 sind jeweils mit einer als Gelenkwelle ausgeführten Antriebswelle 15 verbunden, die an dem Schneidwerk 1 angeordnet sind. Durch das jeweilige Getriebe 14 wird eine Rotationsbewegung der Antriebswelle 15 in eine oszillierend translatorische Bewegung der an der Messerschiene 5a angeordneten Mähmesser 5 gemäß Pfeil 12 umgesetzt. Der Antriebsstrang 11 umfasst einen Anbindungshebel 13, welcher mit einem Ende mit der oszillierend translatorisch bewegten Messerschiene 5a der Mäheinrichtung 4 verbunden ist. Mit seinem anderen Ende ist der Anbindungshebel 13 durch eine Schraubverbindung 16 drehfest mit einer Eingangswelle 17 des Antriebsstranges 11 verbunden. Weiterhin umfasst der Antriebsstrang 11 eine als Reibkupplung ausgeführte Kupplung 18, eine Ausgangswelle 19 sowie eine entlang der Ausgangswelle 19 verschiebliche Schiebemuffe 20. Die Schiebemuffe 20 dient der manuellen Verbindung der Ausgangswelle 19 mit einer Antriebswelle 21 des Trennmessers 7, die am unteren Ende des Trennmessers 7 angeordnet ist. Bei der Montage des Trennmessers 7 wird die Schiebemuffe 20 in Richtung der Antriebswelle 21 verschoben, bis die Schiebemuffe 20 die Ausgangswelle 19 und die Antriebswelle 21 abschnittsweise überlappt. Die Schiebemuffe 20 ist mittels einer Schraubverbindung 20a auf der Antriebswelle 21 gegen eine axiale Verschiebung fixierbar. Der Anbindungshebel 13 überträgt die oszillierend translatorische Bewegung der Mäheinrichtung 4 auf die Eingangswelle 17 des Antriebsstranges 11.

Das Trennmesser 7 weist zwei geführte Schienen 7a auf, die parallel und relativ zueinander verschieblich angeordnet sind. An den Schienen 7a sind jeweils Mähmesser 7b befestigt. Auf der Antriebswelle 21 ist eine Hebelanordnung 22 angeordnet, welche die oszillierende Schwenkbewegung der Antriebswelle 21 jeweils auf eine der Schienen 7a überträgt. Die Mähmesser 7b werden dadurch gegensinnig in vertikaler Richtung bewegt.

Die Reibkupplung 18 steht mit einem Aktuatorhebel 24 in Verbindung, welcher durch einen Aktuator 23 betätigbar ist. Der Aktuator 23 steht durch Zuleitung 10 mit der Steuerungseinrichtung 8 oder unmittelbar mit der Bedieneinrichtung 9 in Verbindung. Im dargestellten Ausführungsbeispiel ist der Aktuator 23 als Elektromotor ausgeführt.

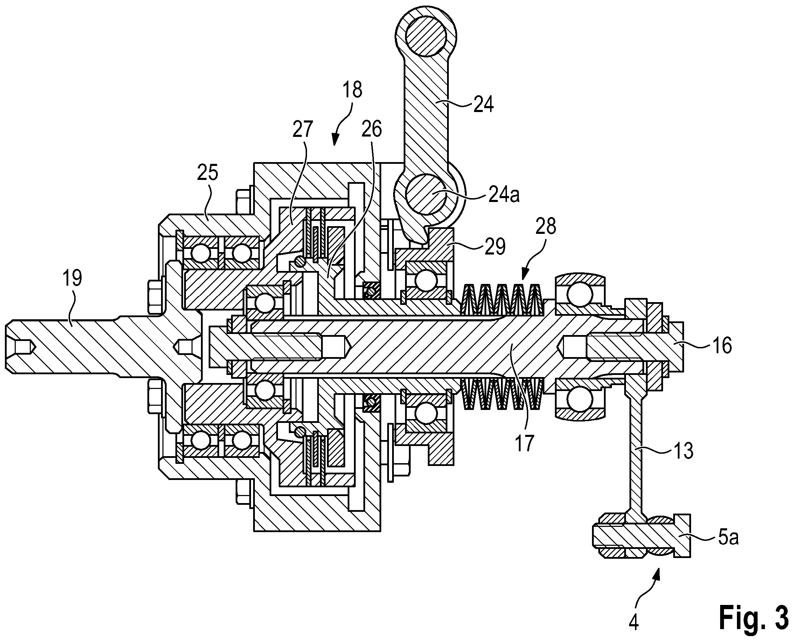

Die Darstellung in Fig. 3 zeigt eine Schnittansicht der in den Antriebsstrang 11 integrierten schaltbaren Kupplung 18 gemäß Fig. 2. Die Kupplung 18 ist als Reib- oder Lamellenkupplung ausgeführt und umfasst ein Gehäuse 25, welches drehbar auf der Eingangswelle 17 und der Ausgangswelle 19 gelagert ist. Die Kupplung 18 weist einen Innenlamellenträger 26 und einen Außenlamellenträger 27 auf. Der Innenlamellenträger 26 ist drehfest, jedoch axial verschieblich auf der Eingangswelle 17 angeordnet. An dem Innenlamellenträger 26 und dem Außenlamellenträger 27 angeordnete Reiblamellen werden durch eine Beaufschlagung des Innenlamellenträgers 26 mit einer Federkraft gegeneinander gepresst, so dass eine reibschlüssige Verbindung erzeugt wird. Die Federkraft wird durch eine Tellerfederanordnung 28 erzeugt, die sich an einer axialen Stirnfläche des Innenlamellenträgers 26 und einem flanschförmigen Abschnitt der Eingangswelle 17 abstützt. Die Auslegung der Tellerfederanordnung 28 bestimmt die Anpresskraft der Kupplung 18. Bei der Inbetriebnahme des Schneidwerks 1 bzw. der Mäheinrichtung 4 wird somit zugleich das Trennmesser 7 angetrieben. Die Größenordnung der von der Tellerfederanordnung 28 aufgebrachten Federkraft lässt sich einstellen, so dass die Kupplung 18 zudem als Überlastsicherung des jeweiligen Trennmessers 7 fungiert. Tritt beim Schneiden mittels eines der Trennmesser 7 ein Blockieren der oszillierenden Bewegung der Schienen 7a auf, führt dies zum Rutschen der Kupplung 18.

Auf dem Innenlamellenträger 26 ist ein axial verschiebbarer Schiebeschlitten 29 angeordnet. Der Schiebeschlitten 29 ist mittels eines um eine Achse 24a schwenkbar an dem Gehäuse 25 gelagerten Aktuatorhebels 24 entgegen der Federkraft der Tellerfederanordnung 28 axial verschiebbar. Hierzu wird der als Linearantrieb ausgebildete Aktuator 23 durch die Steuerungsvorrichtung 8 angesteuert, um den Aktuatorhebel 24 entgegen der Federkraft der Tellerfederanordnung 28 zu betätigen. Das Schwenken des Aktuatorhebels 24 um die Achse 24a wird auf den Schiebeschlitten 29 übertragen, wodurch der Innenlamellenträgers 26 in axialer Richtung verschoben wird. Das Verschieben des Innenlamellenträgers 26 entgegen der Federkraft der Tellerfederanordnung 28 führt dazu, dass der Reibschluss unterbrochen wird. Somit wird das Trennmesser 7 abgeschaltet, ohne dass es der Abschaltung der Mäheinrichtung 4 bedarf.

Um das Trennmesser 7 zuzuschalten, ist es ausreichend den als Elektromotor ausgebildeten Aktuator 23 stromlos zu schalten. Die Tellerfederanordnung 28 bewirkt das Einrücken der Kupplung 18 durch das Aneinanderpressen der an dem Innenlamellenträger 26 und dem Außenlamellenträger 27 angeordneten Reiblamellen.

Wie weiter oben ausgeführt, ist gemäß der ersten Ausführungsform vorgesehen, dass die Antriebsstränge 11 der Trennmesser 7 auf beiden Seiten des Schneidwerkes 1 identisch ausgeführt sind. Damit ist es möglich durch eine Ansteuerung nur eines Aktuators 23 eine Kupplung 18 auszurücken, um den Antriebsstrang 11 auf einer Seite des Schneidwerks 1 im laufenden Betrieb der Mäheinrichtung 4 zu unterbrechen, während die Kupplung 18 auf der gegenüberliegenden Seite des Schneidwerks 1 geschlossen bleibt. Durch das gleichzeitige oder zeitversetzte Ansteuern beider Aktuatoren 23 lassen sich beide Trennmesser 7 durch das Unterbrechen des jeweiligen Antriebsstranges 11 im laufenden Betrieb der Mäheinrichtung 4 abschalten.

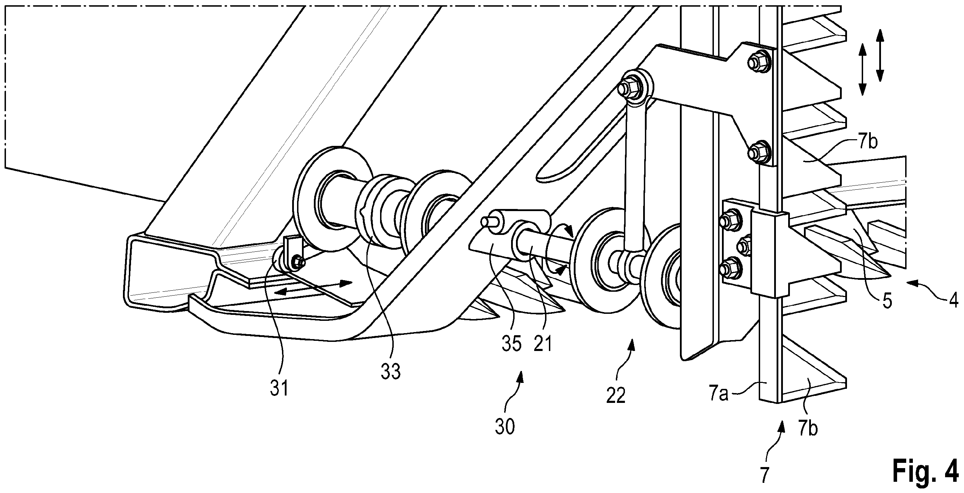

In Fig. 4 ist eine schematische Darstellung eines Antriebsstranges 30 zum mechanischen Antreiben eines Trennmessers 7 gemäß einer zweiten Ausführungsform des Schneidwerks 1 gezeigt. Das Schneidwerk 1 weist auf einer Seite den Antriebsstrang 11 auf, wie er zuvor beschrieben wurde, um zumindest ein Trennmesser 7 mechanisch anzutreiben und im laufenden Betrieb der Mäheinrichtung 4 zu- oder abschalten zu können. Auf der gegenüberliegenden Seite ist der Antriebsstrang 30 vorgesehen, der sich von dem Antriebsstrang 11 dadurch unterscheidet, dass dieser nicht das Zu- und Abschalten des durch diesen Antriebsstrang 30 angetriebenen Trennmessers 7 ermöglicht. Der Antriebsstrang 30 umfasst einen Anbindungshebel 31, welcher mit der oszillierend translatorisch bewegten Messerschiene 5a der Mäheinrichtung 4 verbunden ist. Weiterhin umfasst der Antriebsstrang 30 eine Eingangswelle 32, eine als Klauenkupplung ausgeführte Kupplung 33, eine Ausgangswelle 34 sowie eine entlang der Ausgangswelle 34 verschiebliche Schiebemuffe 35. Die Schiebemuffe 35 dient auch hier der manuellen Verbindung der Ausgangswelle 34 mit der Antriebswelle 21 des Trennmessers 7, die am unteren Ende des Trennmessers 7 angeordnet ist.

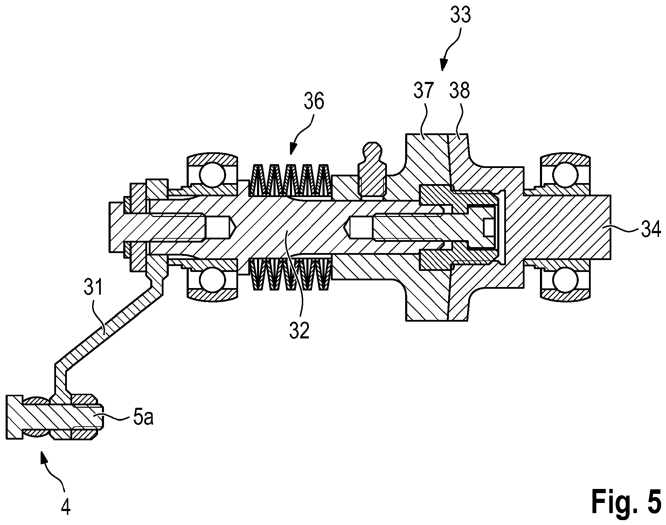

Die Darstellung in Fig. 5 zeigt eine Schnittansicht der in den Antriebsstrang 30 integrierten, als Überlastsicherung ausgeführten Kupplung 33 gemäß Fig. 4. Der Anbindungshebel 31 steht mit der Mäheinrichtung 4 in Verbindung und überträgt dessen Bewegung auf die Eingangswelle 32. Auf der Eingangswelle 32 ist koaxial zu dieser eine Tellerfederanordnung 36 angeordnet, welche sich an einem flanschförmigen Abschnitt der Eingangswelle 32 und an einer axialen Stirnfläche einer auf der Eingangswelle 32 axial verschiebbaren ersten Kupplungshälfte 37 der als Klauenkupplung ausgeführten 33 abstützt. An der Ausgangswelle 34 ist eine zweite Kupplungshälfte 28 der Kupplung 33 drehfest angeordnet. Bei der Montage des Trennmessers 7 wird die Schiebemuffe 35 in Richtung der Antriebswelle 21 des Trennmesser 7 verschoben, bis die Schiebemuffe 20 die Ausgangswelle 34 und die Antriebswelle 21 abschnittsweise überlappt.

Die Tellerfederanordnung 36 beaufschlagt die Kupplung 33 mit einer definierten Federkraft. Treten an dem von dem Antriebsstrang 30 mechanisch angetriebenen Trennmesser 7 Kräfte auf, die die Federkraft übersteigen, führt diese Überlastung zu einem Ausrücken der Kupplung 33. Dadurch wird der Antriebsstrang 30 bei einer Überlastung unterbrochen, um das Trennmesser 7 als auch die Komponenten des Antriebsstranges 30 vor möglichen Beschädigungen zu bewahren.

### Bezugszeichenliste

| | | | |
|---|---|---|---|
| 1 | Schneidwerk | 24a | Achse |
| 2 | Rahmen | 25 | Gehäuse |
| 2a | Schneidtisch | 26 | Innenlamellenträger |
| 2b | Schneidwerksmulde | 27 | Außenlamellenträger |
| 3 | Haspel | 28 | Tellerfederanordnung |
| 4 | Mäheinrichtung | 29 | Schiebeschlitten |
| 5 | Mähmesser | 30 | Antriebsstrang |
| 5a | Messerbalken | 31 | Anbindungshebel |
| 6 | Halmteiler | 32 | Eingangswelle |
| 7 | Trennmesser | 33 | Kupplung |
| 7a | Mähbalken | 34 | Ausgangswelle |
| 7b | Mähmesser | 35 | Schiebemuffe |
| 8 | Steuerungsvorrichtung | 36 | Tellerfederanordnung |
| 9 | Bedieneinrichtung | 37 | Erste Kupplungshälfte |
| 10 | Zuleitung | 38 | Zweite Kupplungshälfte |
| 11 | Antriebsstrang | | |
| 12 | Pfeil | | |
| 13 | Anbindungshebel | | |
| 14 | Getriebe | | |
| 15 | Antriebswelle | | |
| 16 | Schraubverbindung | | |
| 17 | Eingangswelle | | |
| 18 | Kupplung | | |
| 19 | Ausgangswelle | | |
| 20 | Schiebemuffe | | |
| 20a | Schraubverbindung | | |
| 21 | Antriebswelle | | |
| 22 | Hebelanordnung | | |
| 23 | Aktuator | | |
| 24 | Aktuatorhebel | | |

## Patentansprüche

1. Schneidwerk (1), umfassend einen Rahmen (2), an dem eine sich im Wesentlichen über die Breite des Schneidwerks (1) erstreckende, horizontal verlaufende Mäheinrichtung (4) angeordnet ist, die an zumindest einer Messerschiene (5a) angeordnete Mähmesser (5) aufweist, wobei zum Antreiben der Mäheinrichtung (4) zumindest ein Getriebe (14) endseitig an dem Rahmen (2) angeordnet ist, welches eine Rotationsbewegung einer an dem Schneidwerk (1) angeordneten Antriebswelle (15) in eine oszillierend translatorische Bewegung der Mähmesser (5) umsetzen, sowie jeweils endseitig an dem Rahmen (2) lösbar befestigte Trennmesser (7), welche sich im Wesentlichen vertikal zu der Mäheinrichtung (4) erstrecken, von denen zumindest eines durch einen trennbaren mechanischen Antriebsstrang (11, 30) angetrieben ist, **dadurch gekennzeichnet, dass** in zumindest einem Antriebsstrang (11, 30) eine Kupplung (18) angeordnet ist, welche im laufenden Betrieb des Schneidwerkes (1) durch zumindest einen Aktuator (23) betätigt wird, um das zumindest eine Trennmesser (7) zu- oder abzuschalten.

2. Schneidwerk (1) nach Anspruch 1, **dadurch gekennzeichnet, dass** der zumindest eine Aktuator (23) nach einem mechanischen, hydraulischen oder elektromechanischen Wirkprinzip arbeitet.

3. Schneidwerk (1) nach Anspruch 1 oder 2, **dadurch gekennzeichnet, dass** der zumindest eine Aktuator (23) an dem Schneidwerk (1) angeordnet ist.

4. Schneidwerk (1) nach einem der Ansprüche 1 bis 3, **dadurch gekennzeichnet, dass** der zumindest eine Aktuator (23) als Elektromotor ausgeführt ist.

5. Schneidwerk (1) nach einem der vorangehenden Ansprüche, **dadurch gekennzeichnet, dass** zumindest eine durch den Aktuator (23) betätigte Kupplung (18) als eine Reibkupplung ausgeführt ist.

6. Schneidwerk (1) nach einem der vorangehenden Ansprüche, **dadurch gekennzeichnet, dass** zumindest eine Kupplung (33) als Klauenkupplung ausgeführt ist.

7. Schneidwerk (1) nach einem der vorangehenden Ansprüche, **dadurch gekennzeichnet, dass** die zumindest eine Kupplung (18, 33) federbelastet ausgeführt ist.

8. Schneidwerk (1) nach einem der vorangehenden Ansprüche, **dadurch gekennzeichnet, dass** zur trennbaren Verbindung einer der zumindest einen Kupplung (18, 33) nachgeordneten Ausgangswelle (19, 34) mit einer Antriebswelle (21) des Trennmessers (7) eine Schiebemuffe (20, 35) vorgesehen ist.

9. Schneidwerk (1) nach einem der vorangehenden Ansprüche, **dadurch gekennzeichnet, dass** die zumindest eine Kupplung (18, 33) in an dem Schneidwerk (1) montierter Position des zumindest einen Trennmessers (7) auf einer unmittelbar zu der Mäheinrichtung (4) benachbarten Ebene angeordnet sind.

10. Mähdrescher mit einem Schneidwerk (1), welches nach einem der Ansprüche 1 bis 9 ausgebildet ist.

11. Mähdrescher nach Anspruch 10, **dadurch gekennzeichnet, dass** der Mähdrescher eine Bedieneinrichtung (9) umfasst, mit welcher zumindest eine Kupplung (18) im laufenden Betrieb des Schneidwerkes (1) durch eine Ansteuerung des zumindest einen Aktuators (23) zu- oder abgeschaltet wird.

12. Mähdrescher nach Anspruch 11, **dadurch gekennzeichnet, dass** die Bedieneinrichtung (9) in einer Kabine des Mähdreschers angeordnet ist.

## Claims

1. A cutting header (1) including a frame (2) on which is arranged a horizontally extending mowing device (4) which extends substantially over the width of the cutting header (1) and which has mowing blades (5) arranged on at least one blade bar (5a), wherein for driving the mowing device (4) at least one transmission gear (14) is arranged at the end on the frame (2), that converts a rotary movement of a drive shaft (15) arranged on the cutting header (1) into an oscillatingly translatory movement of the mowing blades (5), and separating blades (7) which are respectively releasably fixed at the end to the frame (2) and which extend substantially vertically relative to the mowing device (4), of which at least one is driven by a separable mechanical drive train (11, 30), **characterised in that** disposed in at least one drive train (11, 30) is a clutch (16) which in ongoing operation of the cutting header (1) is actuated by at least one actuator (23) to switch the at least one separating blade (7) on or off.

2. A cutting header (1) according to claim 1 **characterised in that** the at least one actuator (23) operates in accordance with a mechanical, hydraulic or electromechanical operating principle.

3. A cutting header (1) according to claim 1 or claim 2 **characterised in that** the at least one actuator (23) is arranged at the cutting header (1).

4. A cutting header (1) according to one of claims 1 to 3 **characterised in that** the at least one actuator (23) is in the form of an electric motor.

5. A cutting header (1) according to one of the preceding claims **characterised in that** at least one clutch (18) actuated by the actuator (23) is in the form of a friction clutch.

6. A cutting header (1) according to one of the preceding claims **characterised in that** at least one clutch (33) is in the form of a dog clutch.

7. A cutting header (1) according to one of the preceding claims **characterised in that** the at least one clutch (18, 33) is spring-loaded.

8. A cutting header (1) according to one of the preceding claims **characterised in that** a sliding sleeve (20, 35) is provided for the separable connection of an output shaft (19, 34) arranged downstream of the at least one clutch (18, 33) to a drive shaft (21) of the separating blade (7).

9. A cutting header (1) according to one of the preceding claims **characterised in that** the at least one clutch (18, 33) in a position of the at least one separating blade (7) of being mounted on the cutting header (1) is arranged on a plane directly adjacent to the mowing device (4).

10. A combine harvester comprising a cutting header (1) according to one of claims 1 to 9.

11. A combine harvester according to claim 10 **characterised in that** the combine harvester includes an operating device (9) with which at least one clutch (18) in ongoing operation of the cutting header (1) is engaged or disengaged by actuation of the at least one actuator (23).

12. A combine harvester according to claim 11 **characterised in that** the operating device (9) is arranged in a cab of the combine harvester.

## Revendications

1. Tablier de coupe (1) comprenant un cadre (2) sur lequel est disposé un équipement de moissonnage (4) qui s'étend sensiblement sur la largeur du tablier de coupe (1) et s'étend horizontalement et qui comporte des lames de coupe (5) disposées sur au moins une barre de lames (5a), pour entraîner l'équipement de moissonnage (4) étant disposée en bout sur le cadre (2) au moins une transmission (14) qui convertit un mouvement rotatif d'un arbre d'entraînement (15) disposé sur le tablier de coupe (1) en un mouvement translatif oscillant des lames de coupe (5), ainsi que des scies (7) qui sont fixées de façon amovible sur le cadre (2) respectivement aux extrémités, qui s'étendent sensiblement verticalement par rapport à l'équipement de moissonnage (4) et dont au moins une est entraînée par l'intermédiaire d'une chaîne de transmission mécanique séparable (11, 30), **caractérisé en ce que** dans au moins une chaîne de transmission (11, 30) est disposé un accouplement (18) qui est actionné par l'intermédiaire d'au moins un actionneur (23) durant le fonctionnement du tablier de coupe (1) pour activer ou désactiver la au moins une scie (7).

2. Tablier de coupe (1) selon la revendication 1, **caractérisé en ce que** le au moins un actionneur (23) fonctionne selon un principe d'action mécanique, hydraulique ou électromécanique.

3. Tablier de coupe (1) selon la revendication 1 ou 2, **caractérisé en ce que** le au moins un actionneur (23) est disposé sur le tablier de coupe (1).

4. Tablier de coupe (1) selon une des revendications 1 à 3, **caractérisé en ce que** le au moins un actionneur (23) est conformé en moteur électrique.

5. Tablier de coupe (1) selon une des revendications précédentes, **caractérisé en ce qu'**au moins un accouplement (18) actionné par l'actionneur (23) est conformé en accouplement à friction.

6. Tablier de coupe (1) selon une des revendications précédentes, **caractérisé en ce qu'**au moins un accouplement (33) est conformé en accouplement à griffes.

7. Tablier de coupe (1) selon une des revendications précédentes, **caractérisé en ce que** le au moins un accouplement (18, 33) est soumis à une sollicitation élastique.

8. Tablier de coupe (1) selon une des revendications précédentes, **caractérisé en ce que** pour la liaison séparable d'un arbre de sortie (19, 34) disposé à la suite du au moins un accouplement (18, 33) avec un arbre d'entraînement (21) de la scie (7) est prévu un manchon coulissant (20, 35) .

9. Tablier de coupe (1) selon une des revendications précédentes, **caractérisé en ce que**, dans une position de la au moins une scie (7) montée sur le tablier de coupe (1), le au moins un accouplement (18, 33) est disposé sur un plan directement voisin de l'équipement de moissonnage (4) .

10. Moissonneuse-batteuse comprenant un tablier de coupe (1) qui est conçu selon une des revendications 1 à 9.

11. Moissonneuse-batteuse selon la revendication 10, **caractérisée en ce que** la moissonneuse-batteuse inclut un équipement de manœuvre (9) avec lequel au moins un accouplement (18) peut être activé ou désactivé par l'intermédiaire d'un actionnement du au moins un actionneur (23) durant le fonctionnement du tablier de coupe (1).

12. Moissonneuse-batteuse selon la revendication 11, **caractérisée en ce que** l'équipement de manœuvre (9) est disposé dans une cabine de la moissonneuse-batteuse.
